# EUROPÄISCHE PATENTSCHRIFT

(11) **EP 3 840 980 B1**
(45) Veröffentlichungstag und Bekanntmachung des Hinweises auf die Patenterteilung: **24.04.2024**
(21) Anmeldenummer: 19753054.6
(22) Anmeldetag: 12.08.2019
(51) Int. Cl.: B60L 53/24, B60L 53/22, B60L 50/51, H02P 27/14, H02M 7/487, H02M 7/483, H02M 3/158, H02M 7/219, H02P 27/06

(54) **LADEVORRICHTUNG MIT STEUERBARER ZWISCHENKREISMITTELPUNKTSSPANNUNG SOWIE ANTRIEBSSYSTEM MIT EINER DERARTIGEN LADEVORRICHTUNG**
CHARGING APPARATUS WITH CONTROLLABLE INTERMEDIATE CIRCUIT NEUTRAL POINT VOLTAGE AND DRIVE SYSTEM WITH SUCH CHARGING APPARATUS
DISPOSITIF DE CHARGE AVEC TENSION CENTRALE DU CIRCUIT INTERMÉDIAIRE COMMANDABLE ET SYSTÈME D'ENTRAÎNEMENT AVEC TEL DISPOSITIF DE CHARGE

(30) Priorität: 20.08.2018 DE 102018120236
(43) Veröffentlichungstag der Anmeldung: 30.06.2021
(73) Patentinhaber: JHEECO E-DRIVE AG, 9492 Eschen (LI)
(72) Erfinder: STENGERT, Katja, 9464 Lienz (CH)
(74) Vertreter: Grünecker Patent- und Rechtsanwälte PartG mbB
(86) Internationale Anmeldenummer: PCT/EP2019/071529
(87) Internationale Veröffentlichungsnummer: WO 2020/038747

(56) Entgegenhaltungen:
- WO-A1-2004/009397
- WO-A1-2012/093504
- DE-A1-102010 051 323
- DE-A1-102017 200 043
- FR-A1- 2 973 963
- US-A- 5 621 628
- US-A1- 2011 116 293
- US-A1- 2014 049 215
- US-A1- 2018 147 947

## Beschreibung

Die Erfindung betrifft eine Ladevorrichtung zum Laden einer Batterie eines mit einem elektrischen Antriebsmotor ausgebildeten Kraftfahrzeugs gemäß dem Oberbegriff des Anspruchs 1 sowie ein elektrisches Antriebssystem mit einer derartigen Ladevorrichtung gemäß Anspruch 10.

Zum Laden von Elektrofahrzeugen kommen unterschiedliche Ladekonzepte zum Einsatz. Das Laden mit Wechselstrom über die Haussteckdose ist nahezu überall verfügbar, weist jedoch nur geringe Ladeleistungen von unter 5 kW auf. Demgegenüber sind beim Schnelladen an Gleichstromquellen (DC-Laden), etwa über spezielle Ladesäulen, sehr viel höhere Leistungen möglich (50 kW und darüber). Dies erfordert jedoch eine Anpassung der Ladespannung, wenn das verfügbare Spannungslevel der Ladesäule, typischerweise 400 V DC, niedriger ist als das Spannungslevel der Fahrzeugbatterie, mittelfristig 800V DC.

Zur Anpassung des Spannungslevels können Hochsetzsteller, auch unter den Begriffen "Aufwärtswandler", "Boost-Converter" oder "Step-Up-Converter" bekannt, als separate Baueinheiten verwendet werden. Es ist aber auch möglich, einen ohnehin vorhandenen Wechselrichter (im Englischen auch als "Inverter" bezeichnet) des Traktions- bzw. Elektromotors als Hochsetzsteller zur Gleichspannungswandlung zu verwenden. Um im Wechselrichter nicht zusätzliche Induktivitäten für die Hochsetzstellung verwenden zu müssen, ist es bekannterweise möglich, die Wicklungen des Traktionsmotors als Lade-Induktivitäten zu nutzen:
Eine Ladevorrichtung nach dem Oberbegriff des unabhängigen Anspruchs 1 ist aus der DE 10 2017 200 043 A1 bekannt.

DE 10 2016 209 905 A1 zeigt eine Schnellladeeinheit für ein Elektrofahrzeug, wobei der Wechselrichter des Traktionsmotors in Verbindung mit den Motorspulen als Hochsetzsteller dient.

DE 10 2009 052 680 A1 zeigt die Vorschaltung eines Tiefsetzstellers vor dem Wechselrichter.

Neben den 2-Level-Wechselrichtern existieren für Elektrofahrzeuge auch 3-Level-Wechselrichter, die ein drittes Spannungslevel aufweisen. Insbesondere bei 3-Level-Wechselrichtern mit NPC-Topologie (neutral point clamped) reduzieren sich die an den Schaltelementen der Halbbrücken anliegenden Spannungen dadurch auf die Hälfte der Nennspannung. Diese sind entsprechend meist nur noch auf diese Spannung ausgelegt.

DE 10 2016 218 304 B3 zeigt einen 3-Level-Wechselrichter in NPC-Konfiguration (Abkürzung für "neutral point clamped") für ein Elektrofahrzeug, welcher im Schnell-Ladebetrieb als Hochsetzsteller betrieben werden kann, wobei als Induktivitäten für die Hochsetzstellung externe Induktivitäten zum Einsatz kommen.

Beim Betrieb eines 3-Level-Wechselrichters als Hochsetzsteller muss vermieden werden, dass die Schaltelemente die volle Nennspannung sehen. Topoplogiebedingt sind gewisse Schaltzustände verboten, so dass bestimmte Schaltelemente versetzt geschalten - zuerst ein inneres und dann ein äußeres Schaltelement, geschaltet werden müssen. In dieser Zeit fließt ein Strom in den Mittelpunkt des Zwischenkreises (bzw. dessen Kondensator) und lädt diesen unerwünschterweise und mit jedem Schaltzyklus weiter auf. Überschreitet die Spannung des Zwischenkreismittelpunktes die zulässige Sperrspannung der Schaltelemente bzw. Dioden oder überschreitet die Spannung des Zwischenkreismittelpunktes die zulässige Spannung des Kondensators, wird das betroffene Element versagen und führt zu einem Defekt des Wechselrichters. Dies muss vermieden werden.

Im normalen Betrieb (Wechselrichten DC->AC) oszilliert das Spannungslevel im Zwischenkreismittelpunkt; der Zwischenkreismittelpunkt lädt sich jedoch nicht auf. Zur Verringerung dieser Oszillationen wird die Zwischenkreisspannung entweder gar nicht oder aktiv ausgeregelt.

Eine Möglichkeit stellt die virtuelle Ausregelung über eine angepasste Ansteuerung der Halbbrücken dar. Dabei werden die Pulsweiten der einzelnen Phasen zeitlich so angepasst, dass der effektiv in den Zwischenkreismittelpunkt fließende Strom verringert wird. D.h. die Pulsweiten einer Phase sind nicht alle gleich lang. Ein Beispiel hierzu gibt z.B. US 5790396.

Eine andere Möglichkeit ist die Ausregelung über Zuführung externer Ausgleichs-Ladungen:
WO 2012/093504 A1 zeigt einen 3-Level-Inverter mit aktiver Spannungssymmetrierung im Wechselrichterbetrieb (Wandlung DC->AC) mit dem Ziel, die im Zwischenkreis enthaltenen Kondensatoren verkleinern zu können. Die Symmetrierungseinrichtung umfasst steuerbare Schalter und wenigstens einen durch externe Mittel ständig vorgeladenen Hilfskondensator, welcher eine Ladung für den Spannungsausgleich bereitstellt. Die Symmetrierungseinrichtung ist unmittelbar zwischen Mittelpunkt des Zwischenkreises und dem neutralen Eingang der Halbbrücke angeordnet; sie weist insbesondere keine Verbindung zu positiver und negativer Stromschiene auf.

Um nun eine Batterie eines Elektrofahrzeugs mit bestehenden DC-Ladestationen aufzuladen, ist fahrzeugseitig ein Anpassungselement in Form eines DC/DC-Wandlers gewünscht. Kommt nun als Schalttopologie ein 3-Level NPC Wechselrichter zur Anwendung, möchte man diesen gleichzeitig als DC/DC-Wandler verwenden. Gleichzeitig wird eine Lösung für die Spannungs-Balancierung von den beiden Zwischenkreiskapazitäten C1 und C2, d.h. das Beibehalten und/oder Steuern einer Zwischenkreisspannung bzw. Mittelpunktsspannung, gesucht.

Es ist somit Aufgabe der vorliegenden Erfindung, eine verbesserte Gleichstrom-Ladevorrichtung zum Laden einer Batterie eines mit einem Elektromotor ausgebildeten Kraftfahrzeugs anzugeben.

Hierzu wird erfindungsgemäß eine Ladevorrichtung gemäß Anspruch 1 bereitgestellt. Es handelt sich insbesondere um eine Ladevorrichtung zum Laden einer Batterie eines mit einem elektrischen Antriebsmotor ausgebildeten Kraftfahrzeugs, mit einer Induktivität und einem Antriebsumrichter, der im Antriebsbetrieb des Kraftfahrzeugs die Gleichspannung der Batterie für den elektrischen Antriebsmotor wandelt und einen Zwischenkreismittelpunkt aufweist, wobei die Induktivität zusammen mit dem Antriebsumrichter für einen Ladebetrieb der Batterie als Hochsetzsteller dient. Dabei weist die Ladevorrichtung eine steuerbare Schalteinrichtung auf, die ausgebildet ist, den Zwischenkreismittelpunkt elektrisch bzw. auf eine Spannung aufzuladen und/oder zu entladen.

Dadurch wird vermieden, dass während des Ladevorgangs die Zwischenkreismittelpunktsspannung über ein zulässiges Maß steigt, und eine Zerstörung von Kondensator und/oder Schaltelementen bzw. Dioden eintritt. Damit der Antriebsumrichter als Hochsetzsteller agiert, sollte im Ladebetrieb dieser, insbesondere dessen Schalteinheiten in Form von Transistoren, entsprechend angesteuert werden, um die Eingangsspannung (die der Ladungsquelle) auf eine höhere Ausgangsspannung (die der Fahrzeugbatterie) hochzusetzen. Dabei werden die Schalteinheiten periodisch geöffnet und geschlossen. Erfindungsgemäß dient die steuerbare Schalteinrichtung der Ladevorrichtung der aktiven Spannungssteuerung, insbesondere der aktiven Spannungssymmetrierung. Hierbei wird der Zwischenkreismittelpunkt derart verschaltet, dass dieser elektrisch aufgeladen und/oder entladen wird, um eine bestimmte Spannung zu erreichen und beizubehalten. Aufgrund des Begriffs "Spannungssymmetrierung" kann davon ausgegangen werden, dass der Zwischenkreismittelpunkt auf die Hälfte der Spannung der Fahrzeugbatterie geladen bzw. gehalten werden kann.

Erfindungsgemäß erfolgt die Spannungssymmetrierung durch eine derart ausgebildete Schalteinrichtung, die den Zwischenkreismittelpunkt mit dem Pluspol und/oder dem Minuspol der Fahrzeugbatterie, insbesondere periodisch bzw. abwechselnd, elektrisch verbindet bzw. verschaltet. Dadurch wird an einer zusätzlichen Spannungsquelle gespart, wodurch die Kosten der Ladevorrichtung verringert werden.

Vorzugsweise weist die Schalteinrichtung mindestens zwei Transistoren auf, die mit dem Pluspol und dem Minuspol der Batterie verbunden und insbesondere über eine Drosselspule mit dem Zwischenkreismittelpunkt verbunden sind. Hierbei handelt es sich um eine praktische Ausführungsform, die keiner mechanischen Schalter bedarf. Die Drosselspule hat den Vorteil, Ströme mit hohen Frequenzen zu sperren und somit einen gleichmäßigeren Stromfluss zur Spannungssteuerung zu ermöglichen.

Erfindungsgemäß ist die Induktivität durch mindestens eine Wicklung des elektrischen Antriebsmotors ausgebildet. Dadurch können zusätzliche Bauelemente eingespart und somit die Kosten und der Raumbedarf verringert werden.

Mit dem Ziel, neben der Ansteuerung des Elektromotors für den Fahrbetrieb eine effiziente Spannungswandlung im Ladebetrieb bereitzustellen, weist der Antriebsumrichters für drei Spannungsphasen jeweils einen 3-Level-Wechselrichter (auch Phasenbein oder phase leg), insbesondere in Form einer Halbbrücke pro Phase, auf. Jeder 3-Level-Wechselrichter ist mit einer der drei Wicklungen des elektrischen Antriebsmotors verbunden. Dies hat auch den Vorteil, dass alle drei Wicklungen jeweils für einen Hochsetzsteller, insbesondere einzeln oder gleichzeitig, verwendet werden können und somit die Ladeleistung erhöht werden kann.

Vorzugsweise weisen die 3-Level-Wechselrichter bzw. Halbbrücken denselben Zwischenkreismittelpunkt auf. Somit ist die Verschaltung mit nur einer Leitung möglich, wodurch auch wieder Bauelemente und Materialien gespart werden.

In einer weiteren vorteilhaften Ausführungsform ist einer der drei 3-Level-Wechselrichter bzw. Halbbrücken die steuerbare Schalteinrichtung. Zwar wird dadurch die Ladeleistung, aber gleichzeitig auch die Kosten für die Ladevorrichtung verringert. In diesem Fall kann es vorgesehen sein, dass die Schalteinrichtung auftrennbar, insbesondere über einen Schalter, mit einer Wicklung des elektrischen Antriebsmotors verbunden ist.

Ebenso von Vorteil ist es, wenn der Zwischenkreismittelpunkt zwischen zwei in Reihe geschalteten Kapazitäten angeordnet ist, wobei die Batterie des Kraftfahrzeugs parallel zu den Kapazitäten hinzuschaltbar ist.

Vorzugsweise weist die Ladevorrichtung eine Steuerungsschaltung zum Steuern des Antriebsumrichters, insbesondere dessen Halbbrücken, als Hochsetzsteller auf. Somit kann die Steuerungsschaltung sowohl die Aufgabe erfüllen, als Antriebsumrichter und auch als Hochsetzsteller zu agieren und somit Kosten für zusätzliche Bauelemente einzusparen.

Die aktive Spannungssteuerung kann abhängig von einer Spannungsmesseinrichtung zum Messen der Spannung des Zwischenkreismittelpunkts sein. Hierbei ist die Steuerungsschaltung ausgebildet, die Schalteinrichtung abhängig von der gemessenen Spannung, z.B. mittels eines PI-Reglers, zu steuern.

Die vorliegende Erfindung sieht auch ein elektrisches Antriebssystem mit einer erfindungsgemäßen Ladevorrichtung und einer Fahrzeugbatterie vor.

Die nachfolgenden Zeichnungen zeigen bevorzugte Ausführungsbeispiele der erfindungsgemäßen Ladevorrichtung, wobei diese nicht als Einschränkung der Erfindung gelten, sondern im Wesentlichen der Veranschaulichung dienen.

Es zeigen
- Figur 1: einen Schaltungsplan eines elektrischen Antriebssystems mit einer Ladevorrichtung gemäß eines ersten Ausführungsbeispiels;
- Figur 2: Signaldiagramme von dem Strömen einzelner Bauelemente der Ladevorrichtung aus Figur 1;
- Figur 3: Signaldiagramme von Strömen und Spannungen hinsichtlich des Zwischenkreismittelpunkts einer erfindungsgemäßen Ladevorrichtung;
- Figur 4: Signaldiagramme von Strömen und Spannungen gemäß Figur 3, die zeitlich vergrößert dargestellt sind;
- Figur 5: einen Schaltungsplan eines elektrischen Antriebssystems mit einer Ladevorrichtung gemäß eines zweiten Ausführungsbeispiels; und
- Figur 6: einen Schaltungsplan eines elektrischen Antriebssystems mit einer Ladevorrichtung gemäß eines dritten Ausführungsbeispiels.
- Figur 7: einen Schaltungsplan eines elektrischen Antriebssystems mit einer Ladevorrichtung gemäß eines vierten Ausführungsbeispiels.

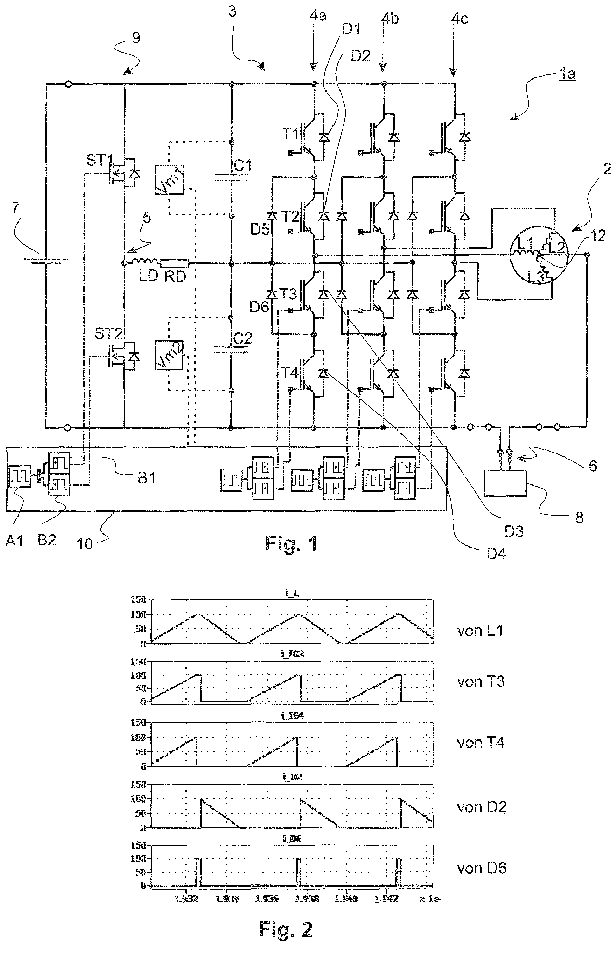

Figur 1 zeigt ein elektrisches Antriebssystem 1a, das mit einem elektrischen Motor 2 ausgestattet ist. Der Elektromotor 2 weist drei Induktivitäten L1, L2 und L3 in Form von Spulenwicklungen auf. Diese Spulen L1, L2 und L3 werden jeweils mittels einer Halbbrücke 4a, 4b und 4c eines Antriebsumrichters 3 mit einem Wechselstrom versorgt werden und den Elektromotor 2, insbesondere dessen Rotor (nicht dargestellt), in Rotation versetzen können. Um den Gleichstrom von einer Batterie 7 in einen Wechselstrom umzuwandeln, werden die Halbbrücken 4a, 4b und 4c durch eine Steuerungsschaltung 10 gesteuert. Die Ansteuerung der Halbbrücken 4a, 4b und 4c erfolgt derart, dass diese periodisch und abwechselnd den Pluspol und den Minuspol mit den Spulen L1, L2 und L3 verschalten. Die drei erzeugten Wechselströme der Halbbrücken sind jeweils um 120° in Phase zueinander verschoben. Jede Halbbrücke 4a, 4b und 4c weist jeweils die folgenden Bauelemente auf: vier Transistoren (z.B. MOSFETs, insbesondere IGBTs) T1, T2, T3 und T4 mit jeweils einer zwischen Drain und Source verschalteten Diode D1, D2, D3 und D4, sowie zwei Dioden D5 und D6, die mit einem Zwischenkreismittelpunkt 5 des Antriebsumrichters 3 verbunden sind. Der Zwischenkreismittelpunkt 5 liegt zwischen den beiden in Reihe geschalteten Zwischenkreiskapazitäten C1 und C2, die parallel zu den drei Halbbrücken 4a, 4b und 4c angeordnet sind. Der Zwischenkreismittelpunkt 5 ist mit jeder Halbbrücke 4a, 4b und 4c über die entsprechenden Dioden D5 und D6 elektrisch verbunden. Die drei Induktivitäten L1, L2 und L3 des Elektromotors 2 sind in einer Sternschaltung miteinander verschaltet; im Antriebsmodus ist auch eine Dreiecksschaltung der Spulen L1, L2 und L3 möglich. Des Weiteren verläuft ein Leiter von dem Sternpunkt 12 des Elektromotors 2 zu einem Steckeranschluss 6, der eine Ladequelle 8, z.B. eine Ladesäule, mit dem Minuspol der Batterie 7 und dem Sternpunkt 12 verbindet. Während des Antriebs- bzw. Fahrtmodus ist entweder der Steckeranschluss 6 von dem übrigen System 1a elektrisch getrennt, z.B. durch einen Schalter, oder keine Ladequelle 8 ist an dem Anschluss 6 angeschlossen. Die Fahrzeugbatterie 7 ist mit dem Antriebsumrichter 3 verbunden und versorgt diesen mit einer Gleichspannung. Für den Antriebsmodus ist die Steuerungsschaltung 10 des elektrischen Antriebssystems 1 ausgebildet, die Halbbrücken 4a, 4b und 4c und somit deren Transistoren D1, D2, D3 und D4 derart zu steuern, dass jeweils ein Wechselstrom erzeugen wird, der zu den beiden anderen Strömen um 120° Phasen verschoben ist. Somit fließt z.B. ein Strom vom Pluspol der Batterie 7, über die Transistoren T1 und T2 der ersten Halbbrücke 4a zur ersten Spule L1 und dann über die Spulen L2 und L3 und deren Transistoren T3 und T4 der zweiten und dritten Halbbrücke 4b und 4c zum Minuspol der Batterie 7. Für den Lademodus ist die Steuerungsschaltung 10 ausgebildet, die Halbbrücken 4a, 4b und 4c derart zu steuern, dass diese in Kombination mit den Spulen L1, L2 und L3 als Hochsetzsteller fungieren. Während des Lademodus fließt jedes Mal beim Sperren des Transistors T4 und danach des Transistors T3 ein geringer Ausgleichsstrom in den Zwischenkreismittelpunkt 5 und lädt die Kapazitäten C1 und C2 auf. In der Regel beträgt die Spannung des Mittelpunkts 5 die Hälfte des Batteriespannung 7, insbesondere während des Antriebsmodus. Beim Lademodus verschiebt sich die Spannung des Zwischenkreismittelpunkts 5 aufgrund des Ausgleichsstroms und beeinflusst die Effizienz und Funktionsfähigkeit des Hochsetzstellers. Um diese elektrische Ladung zu neutralisieren, ist eine steuerbare Schalteinrichtung 9 vorgesehen. In diesem Fall weist die Schalteinrichtung 9 zwei Transistoren ST1 und ST2 auf, die über eine Drosselspule LD und einen Entkopplungswiderstand RD mit dem Zwischenkreismittelpunkt 5 verbunden ist. Die beiden Transistoren ST1 und ST2 sind zueinander in Reihe und parallel zur Batterie 7 als auch zu den beiden Kondensatoren C1 und C2 geschaltet. Die Transistoren ST1 und ST2 werden über die Steuerungsschaltung 10 derart gesteuert, dass eine elektrische Ladung entweder von der Batterie 7 an den Zwischenkreismittelpunkt 5 oder umgekehrt geleitet wird. Dadurch kann die Spannung des Mittelpunkts 5 auf einen bestimmten Wert erhöht oder verringert und schlussendlich beibehalten bzw. stabilisiert werden. Die Spannung des Mittelpunkts 5 wird durch Messung der Spannung der beiden Kondensatoren C1 und C2 bestimmt. Hierzu sind ein erster und ein zweiter Spannungsmesser jeweils parallel zu den Kondensatoren C1 und C2 verschaltet und geben das Ergebnis der Spannungsmessung an die Steuerschaltung 10 weiter. Die Steuerungsschaltung 10 weist sowohl für die Transistoren ST1 und ST2 der Schalteinrichtung 9 als auch für die Transistoren T3 und T4 der Halbbrücken 4a, 4b und 4c jeweils einen Reckecksignalerzeuger A1 und zwei Signalmodulatoren B1 und B2 auf.

Figur 2 zeigt fünf Stromdiagramme für die folgenden Schaltungselemente (von oben nach unten, X-Achse: Strom in Ampere, Y-Achse: Zeit in Millisekunden) während des Lademodus: Spule L1, Transistor T3, Transistor T4, Diode D2 und Diode D6. Der Stromfluss durch die Spule L1 verläuft als Dreiecksform von 0 bis 100 Ampere (siehe erstes Diagramm). Im zweiten und dritten Diagramm wird der Stromfluss gezeigt, der einmal durch den Transistor T3 und durch den Transistor T4 verläuft (siehe zweites und drittes Diagramm). Hierbei erkennt man, dass der Stromfluss durch den Transistor T4 früher im Vergleich zum Transistor T3 abbricht. Das heißt, der Transistor T4 sperrt vor dem Transistor T3. Sobald der Transistor T3 ebenfalls sperrt, fließt der Strom von der Spule L1 über die Diode D2 (und die Diode D1) zur Batterie 7 (siehe viertes Diagramm). In der kurzen Zeit, in der der Transistor T4 sperrt und der Transistor T3 noch offen ist, fließt der geringe Ausgleichsstrom über die Diode D6 zum Zwischenkreismittelpunkt 5 (siehe fünftes Diagramm) und lädt diesen dadurch auf.

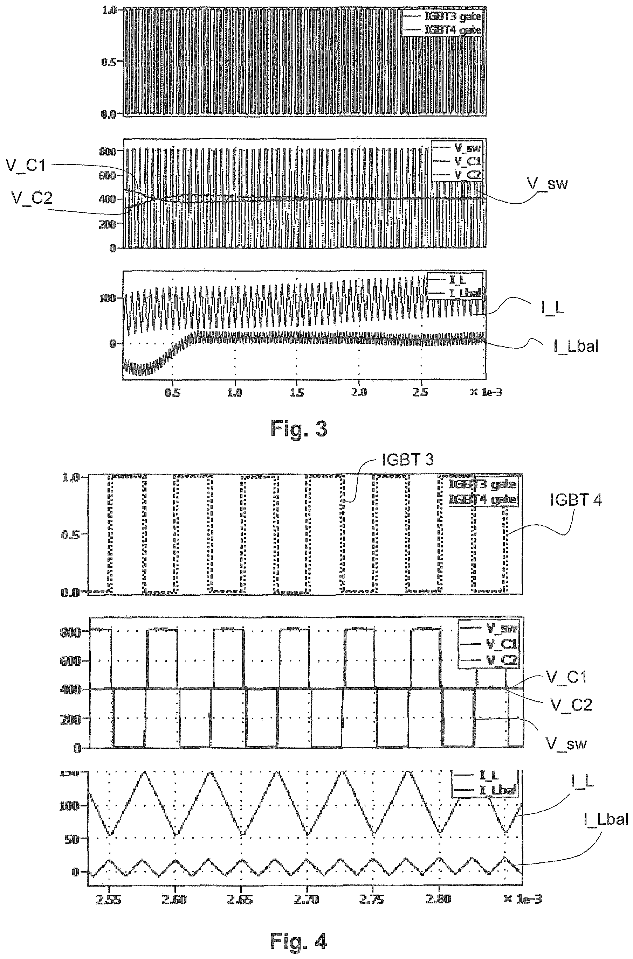

Figur 3 und 4 zeigen jeweils drei Signaldiagramme von verschiedenen Schaltungselementen aus dem Antriebssystem von Fig. 1, wobei die Signale in Fig. 3 von 0 Sekunden bis 3 Millisekunden und in Fig. 4 von ungefähr 2,55 bis 2,95 Millisekunden dargestellt werden. Das bedeutet, dass die Signale der Signaldiagramme in Fig. 4 zu denen in Fig. 3 zwar vergrößert, aber schlussendlich identisch sind. Das erste Signaldiagramm zeigt die Spannungssignale IGBT3 und IGBT4 als Gate-Steuersignale der Transistoren T3 und T4 an (X-Achse: 0 bis 1 Volt). Hierbei ist gut zu erkennen, dass der Transistor T4 immer vor dem Transistor T3 sperrt, damit der Transistor T3 nicht die komplette Spannung sieht und somit geschützt wird. Das zweite Signaldiagramm zeigt die Spannungen V_C1 und V_C2 an den Kondensatoren C1 und C2, die durch mittels der gesteuerten Schalteinrichtung 9 um die Hälfte der Batteriespannung oszillieren (X-Achse: 0 bis 800 Volt). Hierbei erkennt man, dass die Spannung des Zwischenkreismittelpunkts 5, die der Spannung V_C2 oder der Spannung der Batterie 7 abzüglich der Spannung V_C1 entspricht, sich mit der Zeit einschwingt bzw. stabilisiert. Die Spannung V_SW zeigt die durch den Hochsetzsteller auf 800V aufwärtsgewandelte Spannung, sobald beide Transistoren T3 und T4 gesperrt bzw. offen sind und kein Strom mehr über diese Transistoren fließt. Wenn beide Transistoren T3 und T4 geschlossen sind und ein Strom über diese fließt, fällt die Spannung auf ungefähr 0V bzw. auf die Spannung des Minuspols der Batterie 7 zuzüglich dem Spannungsabfall über die Transistoren T3 und T4. In der kurzen Zeit, in der der vierte Transistor T4 offen und der dritte Transistor T3 geschlossen ist, fließt kurzzeitig ein Strom über die Diode D6 (siehe auch 5. Diagramm von Fig. 2) zum Zwischenkreismittelpunkt 5 (siehe Fig. 1). Diesen Strom gilt es, mittels der steuerbaren Schalteinrichtung 9 zu neutralisieren. Das dritte Signaldiagramm zeigt den von der Spule stammenden Strom I_L und einen durch die Drosselspule fließenden Strom I_Lbal (X-Achse: 0 bis 150 Ampere), der zum Laden/Entladen des Zwischenkreismittelpunkts 5 bzw. der Kondensatoren C1 und C2 und somit zum Stabilisieren dessen/deren Spannung dient. Die beiden Ströme stabilisieren sich mit der Zeit und schwingen schließlich um jeweils einen Mittelwert, I_L bei 100 A und I_Lbal bei ca. 5 A. Die Frequenz des Stroms I_L ist niedriger als die Frequenz des Stroms I_Lbal.

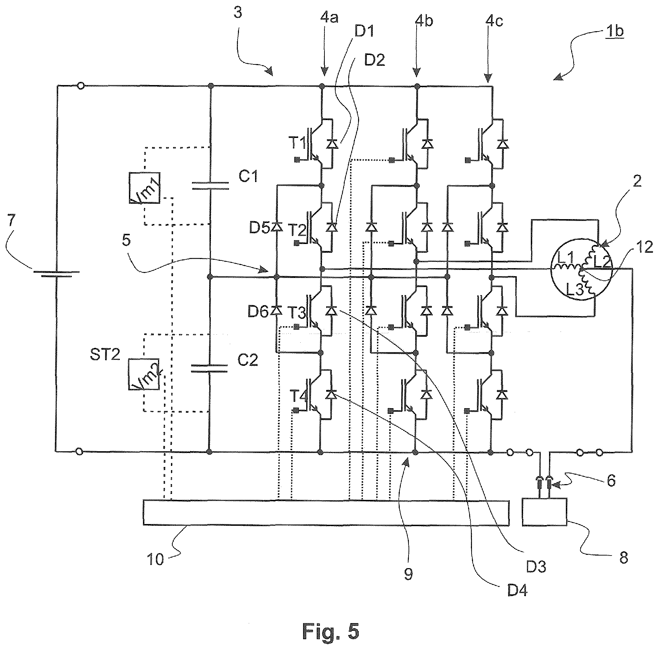

Figur 5 zeigt ein weiteres elektrisches Antriebssystem 1b mit einer erfindungsgemäßen Ladevorrichtung gemäß eines weiteren bevorzugten Ausführungsbeispiels. Bis auf die Transistoren ST1 und ST2 der Schalteinrichtung 9, die Drosselspule LD und den Entkopplungswiderstand RD aus Fig. 1 ist das Antriebssystem 1b aus Fig. 5 identisch zum Antriebssystem 1a aus Fig. 1. Um den Zwischenkreismittelpunkt 5 elektrisch zu laden und/oder zu entladen, wird anstelle von zusätzlichen Transistoren, z.B. ST1 und ST2 aus Fig. 1, die Halbbrücke 4b als Schalteinrichtung 9 verwendet. In diesem Fall kann die Halbbrücke 4b allerdings nicht als Hochsetzsteller während des Lademodus eingesetzt werden. Die Steuerungsschaltung 10 ist hierzu ausgebildet, alle vier Transistoren T1 bis T4 der Halbbrücke 4b während des Lademodus anzusteuern. Damit die elektrische Ladung vom Zwischenkreismittelpunkt 5 zum Minuspol der Batterie 7 abfließen kann, wird der Transistor T1 geöffnet und die übrigen Transistoren T2 bis T4 geschlossen. Diese Schaltungskonfiguration erlaubt einen Stromfluss über die Diode D5 und die Transistoren T2 bis T4 der Halbbrücke 4b zum Minuspol der Batterie 7. Um eine elektrische Ladung vom Pluspol der Batterie 7 zum Zwischenkreismittelpunkt 5 zu leiten, wird der Transistor T4 geöffnet und die Transistoren T1 bis T3 geschlossen. Diese Schaltungskonfiguration erlaubt einen Stromfluss vom Pluspol der Batterie 7 über die Transistoren T1 bis T3 und die Diode D6 der Halbbrücke 4b.

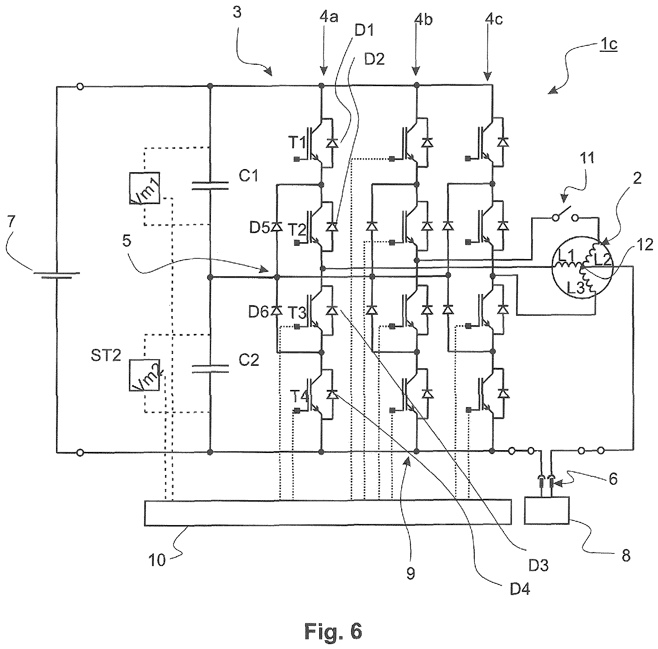

Figur 6 zeigt ein weiteres elektrisches Antriebssystem 1c mit einer erfindungsgemäßen Ladevorrichtung gemäß eines weiteren bevorzugten Ausführungsbeispiels. Unter Absehung des Schalters 11 ist das Ausführungsbeispiel identisch zu dem aus Figur 5. Der Schalter 11 trennt im Lademodus den Wechselrichter 4b von der Spule L2. Im Fahrtmodus ist der Schalter 11 geschlossen.

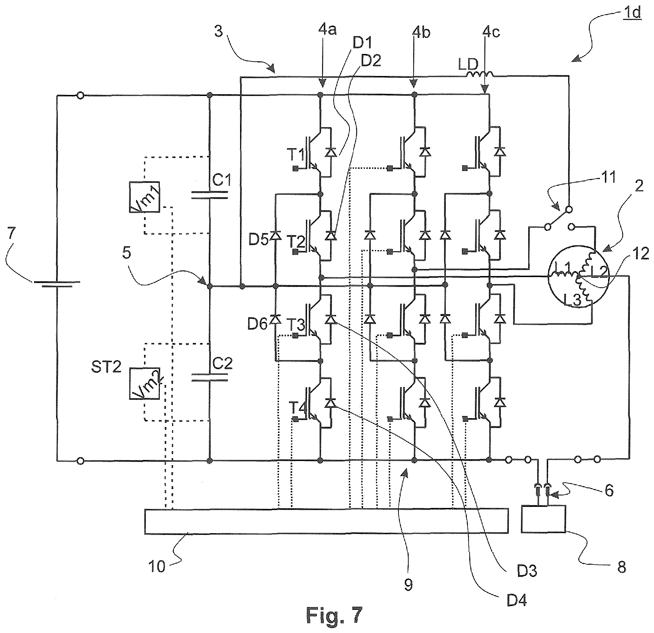

Figur 7 zeigt ein weiteres elektrisches Antriebssystem 1d mit einer erfindungsgemäßen Ladevorrichtung gemäß eines weiteren bevorzugten Ausführungsbeispiels. Bis auf die Verwendung des Betriebsmodus-Schalter 11 und eine über diesen Schalter hinzuschaltbare Drosselspule LD ist das Antriebssystem 1d aus Fig. 7 identisch zum Antriebssystem 1b aus Fig. 5. Die Halbbrücke 4b dient wieder als steuerbare Schalteinrichtung 9 während des Lademodus und als Wechselrichter während des Fahrtmodus. Der Schalter 11 verbindet die Halbbrücke 4b mit der Spule L2 während des Fahrtmodus. Im Lademodus verbindet der Schalter 11 die Halbbrücke 4b anstelle der Spule L2 mit der Drosselspule LD und somit mit dem Zwischenkreismittelpunkt 5. Durch eine entsprechende Ansteuerung der Transistoren T1 bis T4 der Halbbrücke 4b kann ein Strom zum Zwischenkreismittelpunkt 5 fließen (über T1, T2, Schalter 11 und Drosselspule LD) oder vom Mittelpunkt 5 abfließen (über Drosselspule LD, Schalter 11, T3 und T4).

Die Ladevorrichtungen aus Fig. 5,6 und 7 haben den Vorteil, dass idealerweise keine zusätzlichen Bauteile verwendet werden müssen; dies ist dann möglich, wenn die interne Induktivität und der Widerstand der Halbbrücke relativ gesehen ausreichend hoch für die auftretenden "Neutralpunktströme" ist. Dies ist z.B. der Fall bei geringen Ladeleistungen oder bei sehr hoher Taktfrequenz des Symmetrierungsbeins bzw. der Schalteinrichtung 9. Da die elektrischen Antriebssysteme aus Fig. 5 und 6 eines der Halbbrücken als Schalteinrichtung für den Zwischenkreismittelpunkt während des Lademodus verwenden, können nur zwei der drei Beine des Wechselrichters als Hochsetzsteller arbeiten, was die Ladeleistung zunächst auf 2/3 der maximalen Dauerleistung drückt. Durch zyklisches Permutieren der für die Spannungssymmetrierung zuständigen Halbbrücke kann dieser Nachteil teilweise kompensiert werden, indem die hochsetzenden Halbbrücken für jeweils überschaubare oder vorbestimmte Zeiträume oberhalb ihrer dauerfesten Leistungsgrenze betrieben werden, um sich im anschließenden Spannungssymmetrierungsmodus wieder zu akklimatisieren. Je nach Randbedingungen kann es notwendig sein, die Phasen analog den Ausführungsbeispielen 6 und 7 von den Motorwicklungen abtrennbar zu gestalten. Für diesen Fall können den entsprechend auch mehrere Schalter 11 sowie gegebenenfalls Ladedrosseln für jede Phase vorgesehen sein.

### Bezugszeichenliste

- 1a: Elektrisches Antriebssystem, erstes Ausführungsbeispiel
- 1b: Elektrisches Antriebssystem, zweites Ausführungsbeispiel
- 1c: Elektrisches Antriebssystem, drittes Ausführungsbeispiel
- 1d: Elektrisches Antriebssystem, viertes Ausführungsbeispiel

- 2: Elektromotor / elektrischer Antriebsmotor
- 3: Wechselrichter / Antriebsumrichter
- 4a: Erste Halbbrücke bzw. Wechselrichter für die 1. Phase
- 4b: Zweite Halbbrücke bzw. Wechselrichter für die 2. Phase
- 4c: Dritte Halbbrücke bzw. Wechselrichter für die 3. Phase
- 5: Zwischenkreismittelpunkt
- 6: Steckeranschluss
- 7: Fahrzeugbatterie
- 8: Ladequelle bzw. Ladesäule
- 9: Schalteinrichtung
- 10: Steuerungsschaltung
- 11: Betriebsmodus-Schalter
- 12: Sternpunkt
- L1: Erste Motorwicklung
- L2: Zweite Motorwicklung
- L3: Dritte Motorwicklung
- C1: Erster Kondensator
- C2: Zweiter Kondensator
- T1: Erster Transistor
- T2: Zweiter Transistor
- T3: Dritter Transistor
- T4: Vierter Transistor
- D1: Erste Freilaufdiode
- D2: Zweite Freilaufdiode
- D3: Dritte Freilaufdiode
- D4: Vierte Freilaufdiode
- D5: Erste Zwischendiode
- D6: Zweite Zwischendiode
- LD: Drosselspule
- RD: Entkopplungswiderstand
- ST1: Ladetransistor - Erster Transistor der Schalteinrichtung
- ST2: Entladetransistor - Zweiter Transistor der Schalteinrichtung
- A1: PWM oder Rechteck-Signalerzeuger
- B1: Erster Signalmodulator
- B2: Zweiter Signalmodulator
- VM1: Erster Spannungsmesser
- VM2: Zweiter Spannungsmesser

## Patentansprüche

1. Ladevorrichtung zum Laden einer Batterie (7) eines mit einem elektrischen Antriebsmotor (2) ausgebildeten Kraftfahrzeugs, mit
- einer Induktivität (L1), die durch mindestens eine Wicklung des elektrischen Antriebsmotors (2) gebildet ist,
- einem Antriebsumrichter (3), der im Antriebsbetrieb des Kraftfahrzeugs eine Gleichspannung der Batterie (7) für den elektrischen Antriebsmotor (2) wandelt und einen Zwischenkreismittelpunkt (5) aufweist,
wobei die Induktivität zusammen mit dem Antriebsumrichter (3) für einen Ladebetrieb der Batterie (7) als Hochsetzsteller dient,
**dadurch gekennzeichnet, dass**
die Ladevorrichtung eine steuerbare Schalteinrichtung (9) aufweist, die ausgebildet ist, den Zwischenkreismittelpunkt (5) auf eine Spannung aufzuladen und/oder zu entladen, wobei die Schalteinrichtung ausgebildet ist, den Zwischenkreismittelpunkt (5) mit dem Pluspol und/oder mit dem Minuspol der Batterie (7) zu verschalten.

2. Ladevorrichtung nach Anspruch 1,
**dadurch gekennzeichnet, dass**
die Schalteinrichtung (9) mindestens zwei Transistoren aufweist, die mit dem Pluspol und dem Minuspol der Batterie (7) verbunden und über eine Drosselspule mit dem Zwischenkreismittelpunkt (5) verbunden sind.

3. Ladevorrichtung nach einem der Ansprüche 1 bis 2,
**dadurch gekennzeichnet, dass**
der Antriebsumrichter (3) für drei Spannungsphasen jeweils einen 3-Level-Wechselrichter (4a; 4b; 4c) aufweist, wobei jeder 3-Level-Wechselrichter mit einer der drei Wicklungen (L1; L2; L3) des elektrischen Antriebsmotors (2) verbunden ist.

4. Ladevorrichtung nach Anspruch 3,
**dadurch gekennzeichnet, dass**
die drei 3-Level-Wechselrichter (4a; 4b; 4c) denselben Zwischenkreismittelpunkt (5) aufweisen.

5. Ladevorrichtung nach Anspruch 3 oder 4,
**dadurch gekennzeichnet, dass**
einer der drei 3-Level-Wechselrichter (4a; 4b; 4c) die Schalteinrichtung (9) ist.

6. Ladevorrichtung nach Anspruch 5,
**dadurch gekennzeichnet, dass**
die Schalteinrichtung (9) auftrennbar mit einer Wicklung (L1; L2; L3) des elektrischen Antriebsmotors (2) verbunden ist.

7. Ladevorrichtung nach einem der Ansprüche 1 bis 6,
**dadurch gekennzeichnet, dass**
der Zwischenkreismittelpunkt (5) zwischen zwei in Reihe geschalteten Kapazitäten (C1; C2) angeordnet ist, wobei die Batterie (7) parallel zu den Kapazitäten (C1; C2) hinzuschaltbar ist.

8. Ladevorrichtung nach einem der Ansprüche 1 bis 7,
**gekennzeichnet durch**
eine Steuerungsschaltung (10) zum Steuern des Antriebsumrichters (3), insbesondere dessen 3-Level-Wechselrichter bzw. Halbbrücken (4a; 4b; 4c), als Hochsetzsteller und zum Steuern der Schalteinrichtung.

9. Ladevorrichtung nach Anspruch 8,
**gekennzeichnet durch**
eine Spannungsmesseinrichtung zum Messen der Spannung des Zwischenkreismittelpunkts (5), wobei die Steuerungsschaltung ausgebildet ist, die Schalteinrichtung abhängig von der gemessenen Spannung zu steuern.

10. Elektrisches Antriebssystem (1) mit einer Ladevorrichtung nach einem der vorherigen Ansprüche.

## Claims

1. Charging device for charging a battery (7) of a motor vehicle having with an electric drive motor (2), comprising
- an inductor (L1), wherein the inductor (L1) is formed by at least one winding of the electric drive motor (2),
- a drive converter (3), which in the drive mode of the motor vehicle converts a DC voltage of the battery (7) for the electric drive motor (2) and has an DC link center (5),
wherein the inductor together with the drive converter (3) serves as a step-up converter for a charging operation of the battery (7),
**characterized in that**
the charging device has a controllable switching device (9) which is adapted to charge and/or discharge the DC link center (5) to a voltage, wherein the switching device is adapted to connect the DC link center (5) with the positive pole and/or with the negative pole of the battery (7).

2. Charging device according to claim 1,
**characterized in that**
the switching device (9) has at least two transistors which are connected to the positive pole and the negative pole of the battery (7) and are connected to the DC link center (5) via a choke coil.

3. Charging device according to one of claims 1 to 2,
**characterized in that**
the drive inverter (3) for three voltage phases each comprises a 3-level inverter (4a; 4b; 4c), each 3-level inverter being connected to one of the three windings (L1; L2; L3) of the electric drive motor (2).

4. Charging device according to claim 3,
**characterized in that**
the three 3-level inverters ( 4a; 4b; 4c) have the same DC link center (5).

5. Charging device according to claim 3 or 4,
**characterized in that**
one of the three 3-level inverters ( 4a; 4b; 4c) is the switching device (9).

6. Charging device according to claim 5,
**characterized in that**
the switching device (9) is separably connected to a winding (L1; L2; L3) of the electric drive motor (2).

7. Charging device according to one of claims 1 to 6,
**characterized in that**
the DC link center (5) is arranged between two capacitors (C1; C2) connected in series, the battery (7) being connectable in parallel with the capacitors (C1; C2).

8. Charging device according to one of claims 1 to 7,
**characterized by**
a control circuit (10) for controlling the drive inverter (3), in particular its 3-level inverter or half bridges (4a; 4b; 4c), as step-up converter and for controlling the switching device.

9. Charging device according to claim 8,
**characterized by**
a voltage measuring device for measuring the voltage of the DC link center (5), the control circuit being adapted to control the switching device as a function of the measured voltage.

10. Electric drive system (1) with a charging device according to one of the preceding claims.

## Revendications

1. Dispositif de charge permettant de charger une batterie (7) d'un véhicule automobile équipé d'un moteur d'entraînement électrique (2), comprenant
- une inductance (L1) formée grâce à au moins un enroulement du moteur d'entraînement électrique (2),
- un convertisseur d'entraînement (3) présentant un centre de circuit intermédiaire (5) et convertissant une tension continue de la batterie (7) à destination du moteur d'entraînement électrique (2) lorsque l'entraînement du véhicule automobile est en fonction,
dans lequel l'inductance accompagnée du convertisseur d'entraînement (3) sert de hacheur survolteur pour un fonctionnement de charge de la batterie (7),
**caractérisé en ce que**
le dispositif de charge présente un dispositif de commutation (9) commandable conçu pour charger et/ou décharger le centre de circuit intermédiaire (5) à une certaine tension, dans lequel le dispositif de commutation est conçu pour connecter le centre de circuit intermédiaire (5) au pôle positif et/ou au pôle négatif de la batterie (7).

2. Dispositif de charge selon la revendication 1,
**caractérisé en ce que**
le dispositif de commutation (9) présente au moins deux transistors qui sont reliés au pôle positif et au pôle négatif de la batterie (7) et qui sont reliés au centre de circuit intermédiaire (5) par l'intermédiaire d'une bobine d'inductance.

3. Dispositif de charge selon l'une quelconque des revendications 1 à 2,
**caractérisé en ce que**
le convertisseur d'entraînement (3) présente respectivement un onduleur à 3 niveaux (4a ; 4b ; 4c) pour trois phases de tension, dans lequel chaque onduleur à 3 niveaux est relié à un des trois enroulements (L1 ; L2 ; L3) du moteur d'entraînement électrique (2).

4. Dispositif de charge selon la revendication 3,
**caractérisé en ce que**
les trois onduleurs à 3 niveaux (4a ; 4b ; 4c) présentent le même centre de circuit intermédiaire (5).

5. Dispositif de charge selon la revendication 3 ou 4,
**caractérisé en ce que**
un des trois onduleurs à 3 niveaux (4a ; 4b ; 4c) est le dispositif de commutation (9).

6. Dispositif de charge selon la revendication 5,
**caractérisé en ce que**
le dispositif de commutation (9) est relié de manière séparable à un enroulement (L1 ; L2 ; L3) du moteur d'entraînement électrique (2).

7. Dispositif de charge selon l'une quelconque des revendications 1 à 6,
**caractérisé en ce que**
le centre de circuit intermédiaire (5) est agencé entre deux capacités (C1 ; C2) connectées en série, dans lequel la batterie (7) peut être connectée en parallèle aux capacités (C1 ; C2).

8. Dispositif de charge selon l'une quelconque des revendications 1 à 7,
**caractérisé par**
un circuit de commande (10) permettant de commander le convertisseur d'entraînement (3), en particulier son onduleur à 3 niveaux ou ses demi-ponts (4a ; 4b ; 4c), en tant que hacheur survolteur et permettant de commander le dispositif de commutation.

9. Dispositif de charge selon la revendication 8,
**caractérisé par**
un dispositif de mesure de tension permettant de mesurer la tension du centre de circuit intermédiaire (5), dans lequel le circuit de commande est conçu pour commander le dispositif de commutation en fonction de la tension mesurée.

10. Système d'entraînement électrique (1) comprenant un dispositif de charge selon l'une quelconque des revendications précédentes.
